# EUROPÄISCHE PATENTSCHRIFT

(11) **EP 3 956 534 B1**
(45) Veröffentlichungstag und Bekanntmachung des Hinweises auf die Patenterteilung: **15.05.2024**
(21) Anmeldenummer: 20721405.7
(22) Anmeldetag: 14.04.2020
(51) Int. Cl.: E05B 81/20

(54) **TÜRSCHLOSS INSBESONDERE KRAFTFAHRZEUGTÜRSCHLOSS**
DOOR LOCK, IN PARTICULAR MOTOR VEHICLE DOOR LOCK
SERRURE DE PORTE, EN PARTICULIER SERRURE DE PORTE DE VÉHICULE AUTOMOBILE

(30) Priorität: 18.04.2019 DE 102019110253
(43) Veröffentlichungstag der Anmeldung: 23.02.2022
(73) Patentinhaber: Kiekert AG, 42579 Heiligenhaus (DE)
(72) Erfinder: KEJDANA, Ale, 535 01 Prelouc (CZ); SOLDAT, Rostislav, 58845 Dolní Cerekev (CZ)
(74) Vertreter: Kiekert AG Patentabteilung
(86) Internationale Anmeldenummer: PCT/DE2020/100296
(87) Internationale Veröffentlichungsnummer: WO 2020/211905

(56) Entgegenhaltungen:
- EP-A2- 1 243 725
- DE-A1- 19 933 371
- DE-A1-102008 048 773
- DE-U1-202013 102 505
- DE-U1-202016 104 688

## Beschreibung

Die Erfindung betrifft ein Türschloss, insbesondere Kraftfahrzeugtürschloss, insbesondere Kraftfahrzeugtürschloss, mit einem Gesperre aus im Wesentlichen Drehfalle und Sperrklinke, und mit einer auf das Gesperre arbeitenden Zuzieheinrichtung, wobei die Zuzieheinrichtung wenigstens einen motorisch angetriebenen Betätigungshebel und eine mit einem Gesperrebauteil wechselwirkende Antriebsklinke sowie wenigstens ein Entriegelungselement zur mechanischen Unterbrechung des Kraftflusses zwischen dem Betätigungshebel und der Antriebsklinke aufweist, und wobei das Entriegelungselement zur Notentriegelung auf ein die Zuzieheinrichtung größtenteils kraftlos trennendes Kupplungselement arbeitet, welches hierbei von seinem vorherigen Zustand "eingekuppelt" in die Funktionsstellung "ausgekuppelt" übergeht.

Türschlösser und insbesondere Kraftfahrzeugtürschlösser sind aus Komfortgründen heutzutage oftmals mit einer Zuzieheinrichtung ausgerüstet. Das gilt nicht nur für Kraftfahrzeugtürschlösser an beispielsweise Heckklappen, sondern zunehmend auch für Kraftfahrzeugtürschlösser an Seitentüren. Mit Hilfe der Zuzieheinrichtung wird das fragliche Kraftfahrzeug-Türschloss von einer zuvor und ursprünglich eingenommenen Vorschließstellung in eine Hauptschließstellung motorisch überführt. Die Einnahme der Vorschließstellung erfolgt demgegenüber typischerweise manuell, in dem ein Bediener die zugehörige Kraftfahrzeugtür oder auch Kraftfahrzeugklappe bis in die Vorschließstellung hinein schließt und dann die motorisch arbeitende Zuzieheinrichtung für den Übergang in die Hauptschließstellung sorgt. Das hat sich grundsätzlich bewährt.

Bei einem Zuziehen einer Kraftfahrzeugtür oder Kraftfahrzeugklappe kann es jedoch zu Situationen dergestalt kommen, dass beispielsweise Bekleidungsstücke eines Bedieners oder andere Gegenstände oder schlimmstenfalls sogar ein oder mehrere Finger eingeklemmt werden. Um solche Situationen zu beherrschen, wird beispielsweise in der DE 10 2006 059 275 A1 der Notabbruch eines Schließvorganges einer Kraftfahrzeugklappe beschrieben. Zu diesem Zweck wird wenigstens ein Betätigungshebel der Klappe überwacht, was über einen Näherungssensor erfolgen kann. Insgesamt findet ein elektrisches Abbrechen des Schließvorganges beim Notentriegeln statt, wobei in diesem Zusammenhang auch eine Bewegungsumkehr eines zugehörigen Stellantriebes vorgesehen ist.

Bei einer anderen Vorgehensweise zur Notunterbrechung gemäß der Lehre nach der DE 20 2008 015 789 U1 ist der Antriebsklinke eine Auswerfereinheit zur wahlweisen Unterbrechung des Zuzieh-/Öffnungsvorganges zugeordnet. Auf diese Weise erfolgt die Notunterbrechung des Zuziehvorganges durch Auswerfen der Antriebsklinke mit Hilfe der Auswerfereinheit.

Der weitere Stand der Technik nach der EP 0 979 915 A2 geht bei einer Schließeinrichtung für Türen oder dergleichen so vor, dass beim Betätigen des Entriegelungselementes gleichzeitig eine mechanische Unterbrechung des Kraftflusses zwischen dem Antrieb für den Betätigungshebel und einer Zuziehhilfe bzw. der Antriebsklinke erfolgt. Zu diesem Zweck arbeitet das Entriegelungselement bzw. ein Entriegelungsmechanismus unmittelbar auf einen Kniehebel. Zur Notentriegelung wird ein Handhebel bzw. ein Heckklappengriff betätigt. Dadurch wird der Betätigungshebel verschwenkt. Hierdurch wird die Drehfalle vollständig freigegeben und die in diesem Zusammenhang mit dem fraglichen Türschloss ausgerüstete Heckklappe springt unter dem Druck der Dichtungsgummis auf.

Beim gattungsbildenden Stand der Technik nach der DE 10 2008 048 773 A1 ist ein Hebeltrieb in Verbindung mit einer Zuzieh-/Öffnungseinrichtung realisiert. Der Hebeltrieb stellt in seiner eingekuppelten Stellung eine mechanische Wirkverbindung zwischen einem Antrieb und einem Gesperre her. Mittels eines Auslösehebels lässt sich der Hebeltrieb in seine ausgekuppelte Stellung überführen. Zu diesem Zweck wechselwirkt der Auslösehebel für den Hebeltrieb mit einem Schlossbetätigungshebel.

Kommt es während eines Zuziehvorganges zu einer Störung oder muss der Zuziehvorgang eine Notunterbrechung erfahren, so wird eine Notunterbrechung dadurch eingeleitet, dass ein Bediener den Schlossbetätigungshebel bzw. Außenbetätigungshebel ziehend beaufschlagt, Das führt dazu, dass der mit dem Außenbetätigungshebel wechselwirkende Auslösehebel bzw. Auswerferhebel auf eine Rastklinke in der Weise arbeitet, dass diese verschwenkt wird und den Kraftfluss unterbindet.

Der Stand der Technik hat sich grundsätzlich bewährt, was die prinzipielle Möglichkeit der Notentriegelung des Türschlosses bzw. Kraftfahrzeugtürschlosses bei einem Zuziehvorgang angeht. Allerdings wird hierbei generell so gearbeitet, dass zur Notentriegelung entweder die Antriebsklinke oder der Betätigungshebel beaufschlagt werden müssen, um den mechanischen Kraftfluss der Zuzieheinrichtung zu unterbrechen. Das erfordert nicht unerhebliche Kräfte, weil während des Zuziehvorganges sowohl der Betätigungshebel als auch die Antriebsklinke durch den motorischen Antrieb beaufschlagt werden, also in gewisser Weise eine Art "Vorspannung" aufweisen. Diese Vorspannung muss dann zur Notunterbrechung bzw. Notentriegelung überwunden werden, wenn hierbei der Betätigungshebel bewegt oder die Antriebsklinke ausgeworfen werden, wie dies der Stand der Technik lehrt. Daraus resultieren zum Teil nicht unerhebliche Betätigungskräfte, mit welchen das Entriegelungselement beaufschlagt werden muss. Solche erhöhten Betätigungskräfte werden zunehmend als störend empfunden. Hier will die Erfindung insgesamt Abhilfe schaffen.

Der Erfindung liegt das technische Problem zugrunde, ein Türschloss und insbesondere Kraftfahrzeugtürschloss des eingangs beschriebenen Aufbaus so weiter zu entwickeln, dass die erforderlichen Betätigungskräfte für das Entriegelungselement gegenüber dem bisherigen Stand der Technik reduziert sind.

Zur Lösung dieser technischen Problemstellung schlägt die Erfindung bei einem gattungsgemäßen Türschloss und insbesondere Kraftfahrzeugtürschloss vor, dass der Notentriegelungshebel als um eine Achse drehbarer Dreiarmhebel mit einer Betätigungsnase einerseits und einem Betätigungsarm andrerseits ausgebildet ist, wobei der Notentriegelungshebel mit seiner Betätigungsnase in eine Kontur an einem Auswerferhebel eingreift.

Die Erfindung greift also neben dem obligatorischen und motorisch angetriebenen Betätigungshebel und der das Gesperrebauteil beaufschlagenden Antriebsklinke zusätzlich auf ein Kupplungselement zurück. Beim normalen Zuziehvorgang nimmt das Kupplungselement seine Stellung "eingekuppelt" ein. Dann ist die Zuzieheinrichtung insgesamt mechanisch geschlossen und es liegt ein durchgängiger Kraftfluss vom motorischen Antrieb über den Betätigungshebel, das Kupplungselement bis schließlich zur Antriebsklinke vor.

Zu diesem Zweck kann die Antriebsklinke beispielsweise auf einem Übertragungselement bzw. Übertragungshebel seinerseits drehbar gelagert sein. Das fragliche Übertragungselement bzw. der Übertragungshebel nimmt darüber hinaus noch das drehbar auf ihm gelagerte Kupplungselement auf, bei dem es sich regelmäßig um einen Kupplungshebel handelt. Der Kupplungshebel wechselwirkt seinerseits mit einer Betätigungskontur am Betätigungshebel, zumindest in seiner Stellung "eingekuppelt". Befindet sich das Kupplungselement bzw. der Kupplungshebel jedoch in seiner Position "ausgekuppelt", so kann der Betätigungshebel mit seiner Betätigungskontur nicht auf das Kupplungselement arbeiten und folglich auch nicht das Übertragungselement und die hierauf drehbar gelagerte Antriebsklinke mit Kraft beaufschlagen.

Die Auslegung ist dabei erfindungsgemäß insgesamt so getroffen, dass das Entriegelungselement zur Notentriegelung auf das fragliche Kupplungselement arbeitet. Hierbei wird das Kupplungselement von seiner zuvor eingenommenen Position "eingekuppelt" in die Funktionsstellung "ausgekuppelt" überführt. Zugleich wird hierbei die Zuzieheinrichtung größtenteils kraftlos getrennt. Hierunter ist im Rahmen der Erfindung zu verstehen, dass das Entriegelungselement ausschließlich auf das Kupplungselement arbeitet, um dieses von seinem vorherigen Zustand "eingekuppelt" in die Funktionsstellung "ausgekuppelt" zu überführen. Bei diesem Vorgang behalten der Betätigungshebel und die Antriebsklinke sowie gegebenenfalls das Übertragungselement ihre Position bei, werden also ausdrücklich nicht mit Hilfe des Entriegelungselementes bewegt, verschwenkt oder dergleichen mit Kraft beaufschlagt.

Auf diese Weise lässt sich die mechanische Verbindung der einzelnen Bestandteile der Zuzieheinrichtung größtenteils kraftlos trennen, weil hierbei lediglich etwaige Reibungskräfte zwischen dem Kupplungselement bzw. Kupplungshebel und der Betätigungskontur am Betätigungshebel überwunden werden müssen. Eine zusätzliche Beaufschlagung des Betätigungshebels findet ebenso wenig statt wie des Übertragungselementes oder der Antriebsklinke, so dass der Übergang des Kupplungselementes bzw. Kupplungshebels von seinem ursprünglich beim Zuziehvorgang eingenommenen Funktionszustand "eingekuppelt" in die Funktionsstellung "ausgekuppelt" im Vergleich zum Stand der Technik besonders kraftarm erfolgen kann.

Bis auf das Kupplungselement bzw. den Kupplungshebel verbleiben sämtliche übrigen Funktionselemente der Zuzieheinrichtung bei diesem Vorgang in ihrer Position. Sobald die Zuzieheinrichtung im Funktionszustand "ausgekuppelt" des Kupplungselementes mechanisch unterbrochen ist, kann sich das mit Hilfe der Antriebsklinke beaufschlagte Gesperrebauteil vom anderen Gesperrebauteil entfernen und nimmt das Gesperre unmittelbar seine geöffnete Stellung ein. Das alles gelingt, in dem ein Bediener das Entriegelungselement besonders kraftarm beaufschlagen kann, so dass etwaige Unannehmlichkeiten beim Zuziehvorgang auf diese Weise schnell, unkompliziert und mit geringen Betätigungskräften beherrscht werden können. Hierin sind die wesentlichen Vorteile zu sehen.

Erfindungsgemäß ist das Entriegelungselement zweiteilig mit dem Notentriegelungshebel und dem Auswerferhebel ausgebildet. Der Auswerferhebel wechselwirkt im Allgemeinen zur Notentriegelung mit einem Betätigungszapfen am Kupplungshebel. Zu diesem Zweck ist der Auswerferhebel vorteilhaft C-förmig oder auch U-förmig ausgelegt. Meistens verfügt der Auswerferhebel über einen Kupplungsarm und einen Betätigungsarm.

Der Betätigungsarm des Auswerferhebels weist im Allgemeinen die Kontur zum Eingriff der Betätigungsnase am Notentriegelungshebel auf. Der Notentriegelungshebel ist seinerseits erfindungsgemäß als Dreiarmhebel ausgeführt. Ein Arm des Notentriegelungshebels fungiert als Betätigungsnase, welche in die Kontur am Betätigungsarm des Auswerferhebels eingreift.

Der zusätzlich zum Betätigungsarm vorgesehene Kupplungsarm am Auswerferhebel verfügt im Allgemeinen über eine Anschlagkante für den Betätigungszapfen des Kupplungshebels. Der Auswerferhebel ist seinerseits drehbar um eine Achse gelagert. Außerdem lässt sich der Auswerferhebel meistens in einer parallel zur Gesperreebene angeordneten Entriegelungsebene bewegen. Die Gesperreebene wird dabei typischerweise von der Drehfalle und der zumindest einen Sperrklinke als Bestandteil des Gesperres aufgespannt. Die Entriegelungsebene ist demgegenüber parallel zur Gesperreebene entweder darüber oder darunter angeordnet. In der Entriegelungsebene findet sich auch der Auswerferhebel.

Meistens ist die Auslegung so getroffen, dass der Notentriegelungshebel zusammen mit dem Auswerferhebel die fragliche Entriegelungsebene aufspannt. Dadurch sind der Notentriegelungshebel sowie der Auswerferhebel als beide Bestandteile des zweiteiligen Entriegelungselementes topologisch vom Gesperre entkoppelt und kann es folglich auch nicht zu ungewollten Wechselwirkungen in diesem Zusammenhang kommen. Vielmehr arbeitet der Notentriegelungshebel auf den Auswerferhebel, welcher seinerseits mit der Anschlagkante am Kupplungsarm auf den Betätigungszapfen des Kupplungshebels arbeitet. Der Kupplungshebel liegt dabei zusammen mit dem Übertragungselement in einer weiteren dritten Ebene, die zumeist zwischen der Gesperreebene einerseits und der Entriegelungsebene andererseits angeordnet ist. Dadurch lassen sich die einzelnen Hebel funktional besonders einfach voneinander entkoppeln.

Die Antriebsklinke ist Ihrerseits meistens in der Gesperreebene angeordnet. Denn die Antriebsklinke arbeitet typischerweise auf die Sperrklinke und/oder die Drehfalle zum Zwecke des Zuziehens. Meistens ist die Auslegung so getroffen, dass die Antriebsklinke beim Zuziehen an einer Kontur der Drehfalle angreift und die Drehfalle ausgehend von ihrer zuvor manuell eingenommenen Vorschließstellung in die Hauptschließstellung überführt. Grundsätzlich kann die Antriebsklinke aber auch auf die Sperrklinke arbeiten, um das Gesperre insgesamt von der Vorschließstellung in die Hauptschließstellung zu überführen.

Im Ergebnis wird ein Türschloss und insbesondere Kraftfahrzeugtürschloss zur Verfügung gestellt, welches eine besonders kraftarme Notentriegelung zur Verfügung stellt. Das lässt sich im Kern darauf zurückführen, dass das Entriegelungselement zur Notentriegelung auf das Kupplungselement als Bestandteil der Zuzieheinrichtung arbeitet, welches bei diesem Vorgang die Zuzieheinrichtung größtenteils kraftlos trennt.

Das Entriegelungselement lässt sich dabei typischerweise von einem Bediener manuell beaufschlagen. Zu diesem Zweck kann beispielsweise der Notentriegelungshebel als Bestandteil des Entriegelungselementes an einen Türgriff, einen Klappengriff etc. angeschlossen sein oder auch zusätzlich zu einem solchen Griff eine Realisierung erfahren. Sobald also der Zuziehvorgang seitens eines Bedieners unterbrochen werden soll, kann dies unmittelbar durch beaufschlagen des Griffes und damit des Entriegelungselementes erfolgen.

Da hierbei die Zuzieheinrichtung größtenteils kraftlos getrennt wird, lässt sich der Zuziehvorgang in praktisch jeder Phase mechanisch unterbrechen, ohne dass dies auf irgendwelche Schwierigkeiten stößt. Das alles gelingt besonders schnell und wirksam, weil für die manuelle Beaufschlagung des Entriegelungselementes nur geringe Betätigungskräfte erforderlich sind. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: Das erfindungsgemäße Kraftfahrzeugtürschloss in einer Übersicht,
- Fig. 2A-2C: verschiedene Phasen eines Zuziehvorganges jeweils in Front- und Rückansicht,
- Fig. 3A: den Beginn einer Notentriegelung bzw. Notunterbrechung bei einem Zuziehvorgang und
- Fig. 3B: die erreichte Notentriegelung bzw. Notunterbrechung.

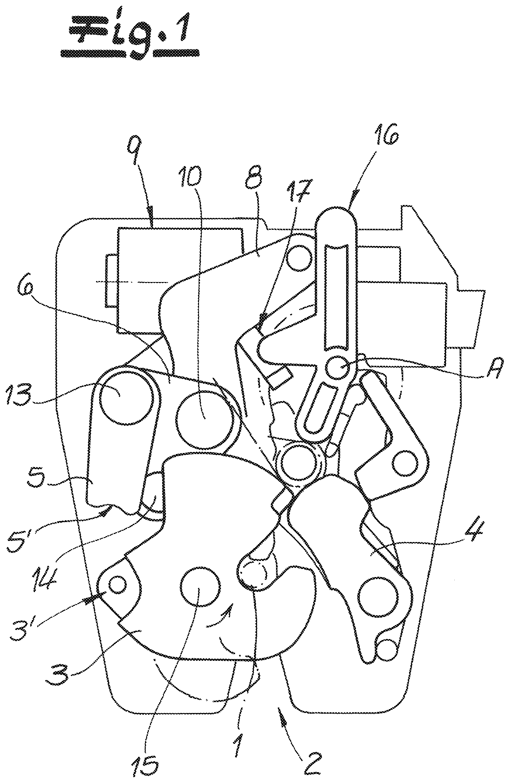

In den Figuren ist ein Türschloss dargestellt, bei dem es sich im Rahmen des Ausführungsbeispiels um ein Kraftfahrzeutürschloss handelt. Das dargestellte Kraftfahrzeugtürschloss kann dabei beispielsweise als Heckklappenschloss, Seitentürschloss oder auch Tankklappenschloss, Fronthaubenschloss etc. ausgebildet sein. In der Fig. 1 ist das Kraftfahrzeugtürschloss in seiner Hauptschließstellung dargestellt. Um diese Funktionsstellung einzunehmen, fährt zunächst ein in der Fig. 1 angedeuteter Schließbolzen 1 in ein Einlaufmaul 2, bis eine in der Fig. 1 strichpunktiert angedeutete Vorschließstellung einer dortigen Drehfalle 3 erreicht ist. Der Übergang der Drehfalle 3 von der strichpunktiert dargestellten Vorschließstellung in die in der Figur 1 durchgezogen dargestellte Hauptschließstellung erfolgt dergestalt, dass nach dem Ausführungsbeispiel auf das dargestellte und realisierte Gesperre 3, 4 aus der Drehfalle 3 und einer Sperrklinke 4 eine Zuzieheinrichtung 5, 6, 7, 8, 9; 16, 17 arbeitet.

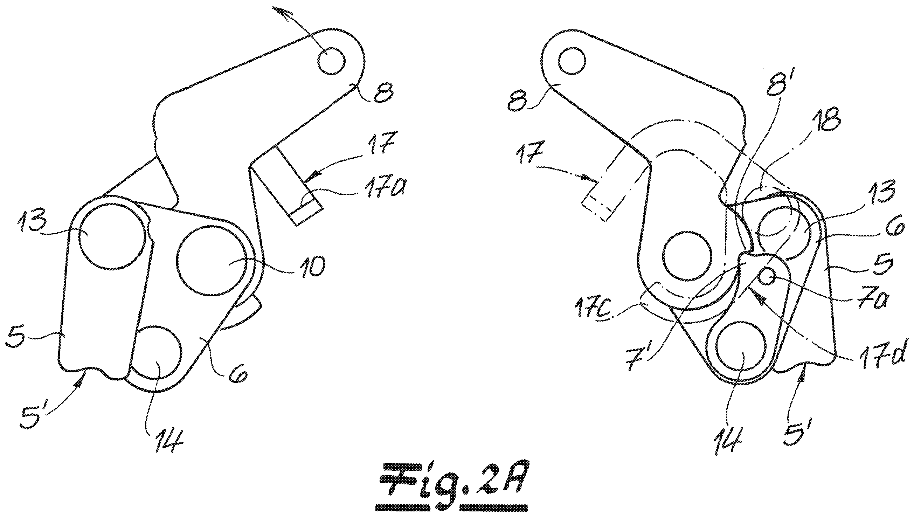

Die Zuzieheinrichtung 5 bis 9; 16, 17 verfügt über wenigstens einen motorisch angetriebenen Betätigungshebel 8. In den Figuren ist zu diesem Zweck ein motorischer Antrieb 9 vorgesehen, welcher den Betätigungshebel 8 beim Zuziehvorgang entsprechend der Darstellung in den Fig. 2A bis 2C in der jeweils links gezeigten Frontansicht dergestalt beaufschlagt, dass der Betätigungshebel 8 eine beispielsweise in der Fig. 2A in der Frontansicht angedeutete Gegenuhrzeigersinnbewegung um seine Achse 10 vollführt. Bei dem motorischen Antrieb 9 handelt es sich typischerweise um einen Elektromotor, welcher von einer angedeuteten Steuereinrichtung 11 beaufschlagt wird, sobald ein zusätzlich vorgesehener Sensor 12 die Einnahme der Vorschließstellung des Gesperres 3, 4 feststellt. Der Sensor 12 mag zu diesem Zweck die in der Fig. 1 strichpunktiert dargestellte Vorschließstellung der Drehfalle 3 abfragen. Sobald das Gesperre 3, 4 die Vorschließstellung erreicht hat, sorgt die Steuereinheit 11 durch Beaufschlagen des motorischen Antriebes 9 dafür, dass der Betätigungshebel 8 in der Frontansicht und entsprechend der Darstellung in den Fig. 2A bis 2C im Gegenuhrzeigersinn um seine Achse 10 motorisch verschwenkt wird.

Zur Zuzieheinrichtung 5, 6, 7, 8, 9; 16, 17 gehört nach dem Ausführungsbeispiel zusätzlich noch eine Antriebsklinke 5, die drehbar um eine Achse 13 auf einem Übertragungselement bzw. Übertragungshebel 6 gelagert ist. Ebenfalls auf dem Übertragungselement bzw. Übertragungshebel 6 drehbar gelagert ist ein Kupplungshebel 7, welcher zu diesem Zweck um eine eigene Achse 14 drehbar gelagert ist. Der Kupplungshebel 7 und die Antriebsklinke 5 sind dabei auf sich gegenüberliegenden Seiten des Übertragungshebels 6 angeordnet und gelagert.

Der Kupplungshebel 7 ist mit einer Betätigungsnase 7` ausgerüstet, welche mit einer Betätigungskontur 8' am Betätigungshebel 8 wechselwirkt, wie nachfolgend noch näher erläutert wird.

Die Antriebsklinke 5 wechselwirkt nach dem Ausführungsbeispiel mit einem Gesperrebauteil 3, 4, konkret mit der Drehfalle 3. Dazu verfügt die Drehfalle 3 über eine Betätigungskontur 3`, in welche eine weitere Betätigungskontur 5' an der Antriebsklinke 5 eingreift bzw. mit dieser wechselwirkt, um die Drehfalle 3 ausgehend von der strichpunktierten Vorschließstellung in der Fig. 1 in die durchgezogen dargestellte Hauptschließstellung zu überführen. Hierbei wird die Drehfalle 3 um ihre Achse 15 im in der Fig. 1 angedeuteten Gegenuhrzeigersinn verschwenkt. Zugleich wird bei diesem Vorgang der Schließbolzen 1 gefangen und in der Hauptschließstellung gesichert. Denn in der Hauptschließstellung des Gesperres 3, 4 kann die Sperrklinke 4 wie gewohnt in die Drehfalle 3 einfallen und zur Sicherung der Drehfalle 3 dienen.

Neben dem motorisch angetriebenen Betätigungshebel 8 der Zuzieheinrichtung 5 bis 9; 16, 17 und der mit dem Gesperrebauteil 3, 4 wechselwirkenden Antriebsklinke 5 verfügt das erfindungsgemäße Kraftfahrzeugtürschloss als wesentliches Funktionselement noch über ein Entriegelungselement 16, 17 als Bestandteil der Zuzieheinrichtung 5 bis 9; 16, 17. Mit Hilfe des Entriegelungselementes 16, 17 lässt sich ein Kraftfluss zwischen dem Betätigungshebel 8 und der Antriebsklinke 5 unterbrechen bzw. allgemein die Zuzieheinrichtung 5 bis 9; 16, 17 mechanisch trennen. Zu diesem Zweck und zur Notentriegelung bzw. Notunterbrechung arbeitet das Entriegelungselement 16, 17 auf das zuvor bereits beschriebene Kupplungselement bzw. den Kupplungshebel 7.

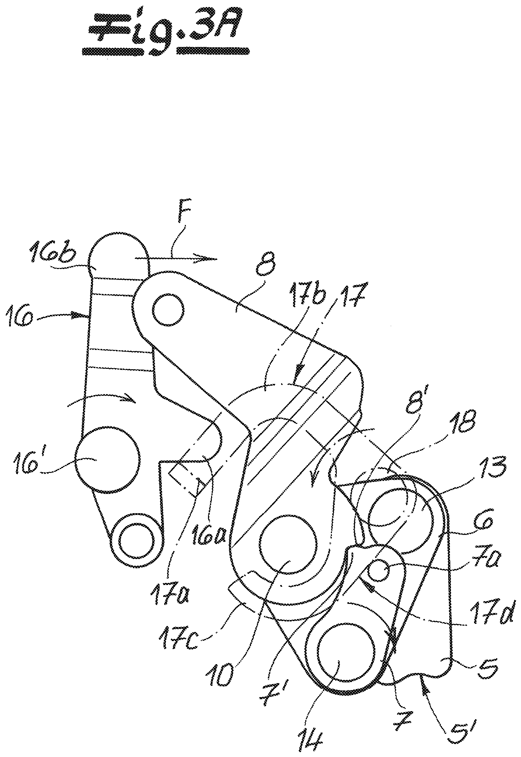

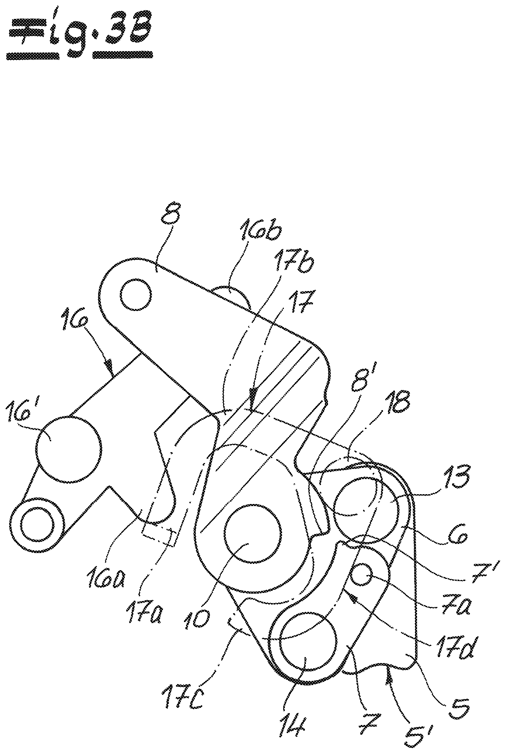

Tatsächlich ist erfindungsgemäß die Auslegung so getroffen, dass das Entriegelungselement 16, 17 zur Notentriegelung bzw. Notunterbrechung der Zuzieheinrichtung 5 bis 9; 16, 17 auf den die Zuzieheinrichtung 5 bis 9; 16, 17 größtenteils kraftlos trennenden Kupplungshebel 7 arbeitet, welcher hierbei von seinem vorherigen Zustand "eingekuppelt" in die Funktionsstellung "ausgekuppelt" übergeht. Das wird nachfolgend noch mit Bezug zu den Fig. 2A bis 2C bzw. 3A und 3B im Details erläutert werden.

Das Entriegelungselement 16, 17 ist seinerseits zweiteilig mit einem Notentriegelungshebel 16 und einem Auswerferhebel 17 ausgebildet. Das erkennt man am besten bei einer vergleichenden Betrachtung der Fig. 3A und 3B, welche das Kraftfahrzeugtürschloss jeweils in einer Rückansicht reduziert auf die wesentlichen Bestandteile wiedergeben.

Der Notentriegelungshebel 16 ist als Zwei- oder Dreiarmhebel ausgebildet. Nach dem Ausführungsbeispiel ist der Notentriegelungshebel 16 als Dreiarmhebel mit einer Betätigungsnase 16a einerseits und einem Betätigungsarm 16b andererseits ausgerüstet. Wie man insbesondere anhand der Fig. 3A und 3B erkennen kann, lässt sich der Betätigungsarm 16b des Notentriegelungshebels 16 mit einer dort dargestellten Kraft F manuell beaufschlagen. Diese Kraft F wird von einem Bediener auf den Notentriegelungshebel 16 in dem Fall ausgeübt, dass die Zuzieheinrichtung 5 bis 9; 16, 17 bei einem Zuziehvorgang unterbrochen werden muss, um beispielsweise ein eingeklemmtes Kleidungstück oder auch einen Finger unmittelbar freizugeben. Zu diesem Zweck kann der Notentriegelungshebel 16 seinerseits an einen Türgriff oder allgemein an einen Griff angeschlossen sein, was selbstverständlich nur beispielhaft gilt und nicht zwingend ist.

Jedenfalls führt eine in der Fig. 3A angedeutete und von einem Bediener zur Notentriegelung aufgebaute Kraft F am Notentriegelungshebel 16 dazu, dass der Notentriegelungshebel 16 um seine Achse 16' im in der Fig. 3A angedeuteten Uhrzeigersinn verschwenkt wird. Als Folge hiervon greift der Notentriegelungshebel 16 mit seiner Betätigungsnase 16a in eine Kontur 17a am Auswerferhebel 17 ein bzw. wechselwirkt mit der fraglichen Kontur 17a.

Der Auswerferhebel 17 ist seinerseits C-förmig oder U-förmig ausgebildet. Dadurch verfügt der Auswerferhebel 17 über einen Betätigungsarm 17b mit der bereits angesprochenen Kontur 17a einerseits und einen Kupplungsarm 17c mit einer Anschlagkante 17d andererseits. Der Auswerferhebel 17 ist seinerseits drehbar um eine Achse 18 gelagert. Die Anschlagkante 17d am Kupplungsarm 17c des Auswerferhebels 17 wechselwirkt mit einem Betätigungszapfen 7a am Kupplungshebel 7.

Die topologische Auslegung ist dabei insgesamt so getroffen, dass beide Gesperrebauteile 3, 4, d. h. die Drehfalle 3 und die Sperrklinke 4, zusammen mit ihren zugehörigen Achsen eine Gesperreebene aufspannen, in welcher sich auch die Antriebsklinke 5 findet. Der Notentriegelungshebel 16 und auch der Auswerferhebel 17 definieren ihrerseits zusammengenommen eine Entriegelungsebene und spannen diese auf, welche parallel zur Gesperreebene und nach dem Ausführungsbeispiel in der Draufsicht nach der Fig. 3A darüber. angeordnet ist. Zwischen der Entriegelungsebene und der Gesperreebene ist noch eine weitere dritte Ebene vorgesehen, in welcher sich größtenteils das Übertragungselement bzw. der Übertragungshebel 6 und das Kupplungselement bzw. der Kupplungshebel 7 befinden. Dadurch lassen sich die einzelnen vorgenannten Funktionselemente unabhängig voneinander und ohne gegenseitige Beeinflussung beaufschlagen und bewegen, wie nachfolgend noch näher erläutert wird.

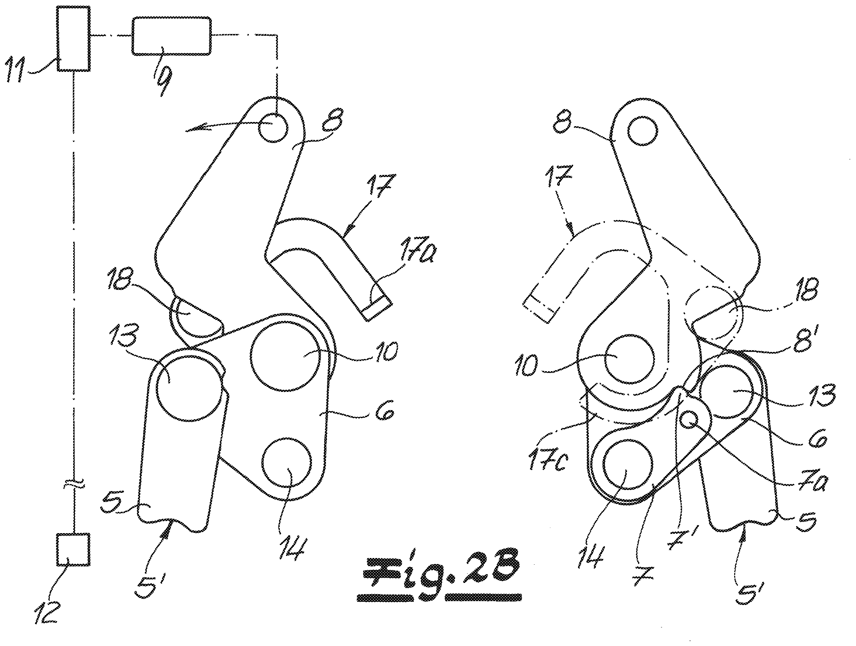

In den Fig. 2A bis 2C ist nun ein Zuziehvorgang generell dargestellt, und zwar jeweils im linken Teil in der Frontansicht und im rechten Teil in einer Rückansicht. Beginnend in der Funktionsstellung nach der Fig. 2A befindet sich der Zuziehantrieb 5 bis 9; 16, 17 in seiner Start- oder Ausgangsposition. Sobald der motorische Antrieb 9 von der Steuereinheit 11 nach Abfrage des Sensors 12 ein Vorschließsignal des Gesperres 3, 4 erfasst hat, wird der Antrieb 9 von der Steuereinheit 11 beaufschlagt, so dass in der Frontansicht beim Übergang von der Fig. 2A zur Fig. 2B der Betätigungshebel 8 im angedeuteten Gegenuhrzeigersinn um seine Achse 10 verschwenkt wird. Hierbei bewegt sich die Antriebsklinke 5 in der Darstellung abwärts und kann mit der Kontur 3' an der Drehfalle 3 wechselwirken, in dem die Kontur 5' an der Antriebsklinke 5 an der betreffenden Kontur 3' der Drehfalle 3 zur Anlage kommt. Als Folge dieser Abwärtsbewegung der Antriebsklinke 5 wird die Drehfalle 3 um ihre Achse 15 ausgehend von der strichpunktierten Vorschließstellung nach der Fig. 1 im Gegenuhrzeigersinn um die Achse 15 verschwenkt, und zwar in Richtung Hauptschließstellung.

Die dargestellte Abwärtsbewegung der Antriebsklinke 5 erklärt sich dadurch, dass die beim Beginn des Zuziehvorganges zu beobachtende Gegenuhrzeigersinnbewegung des Betätigungshebels 8 um seine Achse 10 dazu führt, dass der drehbar an den Betätigungshebel 8 angeschlossene Übertragungshebel 6 bei diesem Vorgang ebenfalls im Gegenuhrzeigersinn bewegt wird und dadurch die Antriebsklinke 5 die zuvor bereits beschriebene Bewegung nach unten vollzieht.

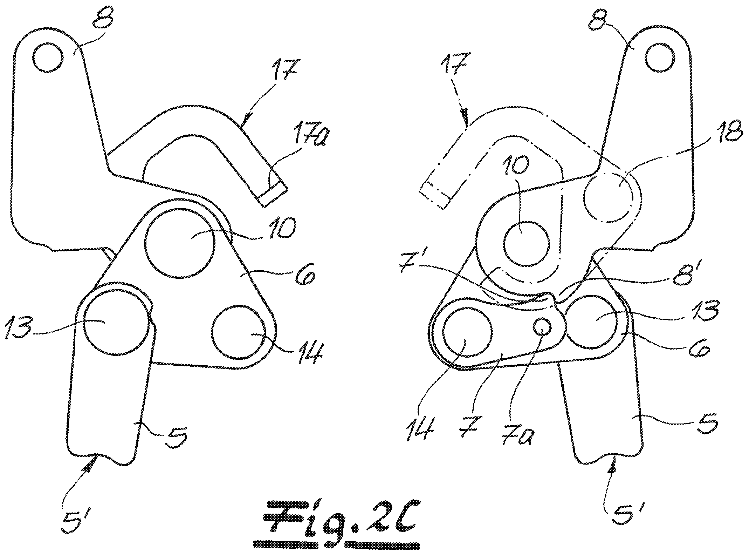

In der Fig. 2C ist nun das Ende des Schließvorganges dargestellt. Bei dieser gesamten Funktionsabfolge befindet sich der Kupplungshebel 7 in seiner in der Fig. 3A vergrößert dargestellten Funktionsstellung "eingekuppelt". Hierzu korrespondiert, dass die Nase 7' am Kupplungshebel 7 mit der Betätigungskontur 8' am Betätigungshebel 8 wechselwirkt bzw. in diese Betätigungskontur 8' eingreift. Dadurch ist eine geschlossene Hebelkette der Zuzieheinrichtung 5 bis 9; 16, 17 realisiert und kann wunschgemäß die Kraft ausgehend vom Antrieb 9 über den Betätigungshebel 8, den Kupplungshebel 7, den Übertragungshebel 6 schließlich auf die Antriebsklinke 5 und somit die Drehfalle 3 zu ihrem Zuziehen übertragen werden.

Soll dieser Zuziehvorgang bei einer Notentriegelung bzw. Notunterbrechung beendet und der Kraftfluss unterbrochen werden, sieht die Erfindung vor, dass das Entriegelungselement 16, 17 zur Notentriegelung auf den Kupplungshebel 7 arbeitet, welcher die Zuzieheinrichtung 5 bis 9; 16, 17 größtenteils kraftlos trennt. Das erkennt man beim Übergang von der Fig. 3A zur Fig. 3B. Tatsächlich korrespondiert die Fig. 3A zum Beginn einer solchen Notentriegelung.

Zu diesem Zweck wird der Notentriegelungshebel 16 von einem Bediener mit der Kraft F beaufschlagt, so dass der Notentriegelungshebel 16 um seine Achse 16' im in der Fig. 3A angedeuteten Uhrzeigersinn verschwenkt. Dadurch kommt die Betätigungsnase 16a am Notentriegelungshebel 16 in Eingriff mit der Kontur 17a am Auswerferhebel 17. Als Folge hiervon wird der Auswerferhebel 17 im angedeuteten Gegenuhrzeigersinn um seine Achse 18 verschwenkt. Dadurch fährt die Anschlagkante 17d am Ausweferhebel 17 gegen den Betätigungszapfen 7a des Kupplungshebels 7.

Das hat zur Folge, dass beim Übergang von der Fig. 3 A zur Fig. 3B der Kupplungshebel 7 um seine Achse 14 im Uhrzeigersinn verschwenkt wird und als Folge hiervon die Nase 7' am Kupplungshebel 7 von der Betätigungskontur 8` des Betätigungshebels 8 freikommt. Der Kupplungshebel 7 geht bei diesem Vorgang von seiner zuvor eingenommenen Funktionsstellung "eingekuppelt" entsprechend der Darstellung in der Fig. 3A in den Funktionszustand "ausgekuppelt" gemäß der Darstellung in der Fig. 3B über. Hierbei wird die Zuzieheinrichtung 5 bis 9; 16, 17 größtenteils kraftlos getrennt, weil sowohl der Betätigungshebel 8 als auch der Übertragungshebel 6 ebenso wie die Antriebsklinke 5 ihre Position beibehalten und bei diesem Vorgang nicht oder allenfalls geringfügig zur Überwindung von Reibungskräften zwischen der Betätigungsnase 7' und der Kontur 8' beaufschlagt werden. Dadurch kann der geschilderte Vorgang des Unterbrechens des Kraftflusses der Zuzieheinrichtung 5 bis 9; 16, 17 jederzeit und mit geringer Betätigungskraft F vorgenommen werden.

In der Funktionsstellung nach der Fig. 3B nimmt nun der Kupplungshebel 7 seine Stellung "ausgekuppelt" ein. Dadurch kann die Drehfalle 3 die Antriebsklinke 5 federunterstützt aufwärts bewegen, so dass unmittelbar der Schließbolzen 1 freikommt und die mit dem beschriebenen Kraftfahrzeugtürschloss ausgerüstete Kraftfahrzeugtür oder Kraftfahrzeugklappe geöffnet werden kann. Ein zuvor eingeklemmtes Kleidungsstück oder ein Finger lassen sich unmittelbar aus dem Spalt zwischen der fraglichen Tür oder Klappe und einer Kraftfahrzeugkarosserie herausziehen.

### Bezugszeichenliste

| | | | |
|---|---|---|---|
| Schließbolzen | 1 | Anschlagkante | 17d |
| Einlaufmaul | 2 | Achse | 18 |
| Drehfalle | 3 | Kraft | F |
| Betätigungskontur | 3' | | |
| Sperrklinke | 4 | | |
| Gesperre | 3, 4 | | |
| Antriebsklinke | 5 | | |
| Betätigungskontur | 5' | | |
| Zuzieheinrichtung | 5, 6, 7, 8, 9 | | |
| Übertragungshebel | 6 | | |
| Kupplungshebel | 7 | | |
| Betätigungsnase | 7` | | |
| Betätigungshebel | 8 | | |
| Betätigungskontur | 8` | | |
| Antrieb | 9 | | |
| Achse | 10 | | |
| Steuereinheit | 11 | | |
| Sensor | 12 | | |
| Achse | 13 | | |
| Achse | 14 | | |
| Achse | 15 | | |
| Achse | 16' | | |
| Entriegelungselement | 16, 17 | | |
| Betätigungsnase | 16a | | |
| Betätigungsarm | 16b | | |
| Auswerferhebel | 17 | | |
| Kontur | 17a | | |
| Betätigungsarm | 17b | | |
| Kupplungsarm | 17c | | |

## Patentansprüche

1. Türschloss, insbesondere Kraftfahrzeugtürschloss, mit einem Gesperre (3, 4) aus im Wesentlichen Drehfalle (3) und Sperrklinke (4), und mit einer auf das Gesperre (3, 4) arbeitenden Zuzieheinrichtung (5, 6, 7, 8, 9; 16, 17), wobei die Zuzieheinrichtung (5 bis 9; 16, 17) wenigstens einen motorisch angetriebenen Betätigungshebel (8) und eine mit einem Gesperrebauteil (3, 4) wechselwirkende Antriebsklinke (5) sowie wenigstens ein Entriegelungselement (16, 17) zur mechanischen Unterbrechung des Kraftflusses zwischen dem Betätigungshebel (8) und der Antriebsklinke (5) aufweist, und wobei dass das Entriegelungselement (16, 17) zur Notentriegelung auf ein die Zuzieheinrichtung (5 bis 9) größtenteils kraftlos trennendes Kupplungselement (7) arbeitet, welches hierbei von seinem vorherigen Zustand "eingekuppelt" in die Funktionsstellung "ausgekuppelt" übergeht, wobei das Entriegelungselement (16, 17) zweiteilig mit einem Notentriegelungshebel (16) und einem Auswerferhebel (17) ausgebildet ist, **dadurch gekennzeichnet, dass** der Notentriegelungshebel (16) als um eine Achse (16') drehbarer Dreiarmhebel mit einer Betätigungsnase (16a) einerseits und einem Betätigungsarm (16b) andererseits ausgebildet ist, wobei der Notentriegelungshebel (16) mit seiner Betätigungsnase (16a) in eine Kontur an dem Auswerferhebel (17) eingreift.

2. Türschloss nach Anspruch 1, **dadurch gekennzeichnet, dass** der Auswerferhebel (17) zur Notentriegelung mit einem Betätigungszapfen (7a) am Kupplungshebel (7) wechselwirkt.

3. Türschloss nach Anspruch 1 oder 2, **dadurch gekennzeichnet, dass** der Auswerferhebel (17) C-förmig mit einem Kupplungsarm (17c) und einem Betätigungsarm (17b) ausgebildet ist.

4. Türschloss nach Anspruch 3, **dadurch gekennzeichnet, dass** der Betätigungsarm (17b) eine Kontur (17a) zum Eingriff der Betätigungsnase (16a) am Notentriegelungshebel (16) aufweist.

5. Türschloss nach Anspruch 3 oder 4, **dadurch gekennzeichnet, dass** der Kupplungsarm (17c) eine Anschlagkante (17d) für den Betätigungszapfen (7a) des Kupplungshebels (7) aufweist.

6. Türschloss nach einem der Ansprüche 1 bis 5, **dadurch gekennzeichnet, dass** der Auswerferhebel (17) drehbar um eine Achse (18) gelagert ist.

7. Türschloss nach einem der Ansprüche 1 bis 6, **dadurch gekennzeichnet, dass** der Auswerferhebel (17) in einer parallel zur Gesperreebene angeordneten Entriegelungsebene bewegbar ist.

8. Türschloss nach einem der Ansprüche 1 bis 7, **dadurch gekennzeichnet, dass** der Notentriegelungshebel (16) zusammen mit dem Auswerferhebel (17) die Entriegelungsebene aufspannt.

## Claims

1. Door latch, in particular a motor vehicle door latch, comprising a locking mechanism (3, 4) consisting substantially of a catch (3) and a pawl (4), and comprising a closing device (5, 6, 7, 8, 9; 16, 17) which acts on the locking mechanism (3, 4), wherein the closing device (5 to 9; 16, 17) has at least one motor-driven operating lever (8) and a drive pawl (5) interacting with a locking mechanism component (3, 4), and has at least one unlocking element (16, 17) for mechanically interrupting the force flux between the operating lever (8) and the drive pawl (5), and wherein the unlocking element (16, 17) acts, for emergency unlocking, on a coupling element (7) which separates the closing device (5 to 9) largely without force, which coupling element in this case transitions from its previous "engaged" state into the "disengaged" functional position, wherein the unlocking element (16, 17) is designed in two parts having an emergency unlocking lever (16) and an ejector lever (17), **characterized in that** the emergency unlocking lever (16) is designed as a three-arm lever rotatable about an axis (16'), which lever has both an operating lug (16a) and an operating arm (16b), wherein the emergency unlocking lever (16) engages by its operating lug (16a) in a contour on the ejector lever (17).

2. Door latch according to claim 1, **characterized in that** the ejector lever (17) interacts with an operating pin (7a) on the coupling lever (7) for an emergency unlocking function.

3. Door latch according to claim 1 or 2, **characterized in that** the ejector lever (17) is C-shaped having a coupling arm (17c) and an operating arm (17b).

4. Door latch according to claim 3, **characterized in that** the operating arm (17b) has a contour (17a) for engaging the operating lug (16a) on the emergency unlocking lever (16).

5. Door latch according to claim 3 or 4, **characterized in that** the coupling arm (17c) has a stop edge (17d) for the operating pin (7a) of the coupling lever (7).

6. Door latch according to any of claims 1 to 5, **characterized in that** the ejector lever (17) is rotatably mounted about an axis (18).

7. Door latch according to any of claims 1 to 6, **characterized in that** the ejector lever (17) can be moved in an unlocking plane arranged parallel to the locking plane.

8. Door latch according to any of claims 1 to 7, **characterized in that** the emergency unlocking lever (16) spans the unlocking plane together with the ejector lever (17).

## Revendications

1. Serrure de porte, en particulier serrure de porte de véhicule automobile, comportant un mécanisme de verrouillage (3, 4) constitué essentiellement par un loquet rotatif (3) et un cliquet d'arrêt (4), et comportant un dispositif de fermeture par traction (5, 6, 7, 8, 9 ; 16, 17) fonctionnant sur le mécanisme de verrouillage (3, 4), dans laquelle le dispositif de fermeture par traction (5 à 9 ; 16, 17) présente au moins un levier d'actionnement (8) entraîné par moteur et un cliquet d'entraînement (5) coopérant avec un composant de mécanisme de verrouillage (3, 4), ainsi qu'au moins un élément de déverrouillage (16, 17) permettant l'interruption mécanique du flux de force entre le levier d'actionnement (8) et le cliquet d'entraînement (5), et dans laquelle l'élément de déverrouillage (16, 17) permettant le déverrouillage d'urgence fonctionne sur un élément d'accouplement (7) séparant le dispositif de fermeture par traction (5 à 9) essentiellement sans force, lequel élément d'accouplement passe ainsi de son état précédent « accouplé » à la position de fonctionnement « désaccouplée », dans laquelle l'élément de déverrouillage (16, 17) est réalisé en deux parties, à savoir un levier de déverrouillage d'urgence (16) et un levier d'éjection (17), **caractérisée en ce que** le levier de déverrouillage d'urgence (16) est réalisé comme un levier à trois bras rotatif autour d'un axe (16') et comportant une saillie d'actionnement (16a) d'une part et un bras d'actionnement (16b) d'autre part, dans laquelle le levier de déverrouillage d'urgence (16) vient en prise avec sa saillie d'actionnement (16a) dans un contour du levier d'éjection (17).

2. Serrure de porte selon la revendication 1, **caractérisée en ce que,** pour le déverrouillage d'urgence, le levier d'éjection (17) coopère avec un doigt d'actionnement (7a) sur le levier d'accouplement (7).

3. Serrure de porte selon la revendication 1 ou 2, **caractérisée en ce que** le levier d'éjection (17) est réalisé en forme de C, avec un bras d'accouplement (17c) et un bras d'actionnement (17b).

4. Serrure de porte selon la revendication 3, **caractérisée en ce que** le bras d'actionnement (17b) présente un contour (17a) permettant la mise en prise de la saillie d'actionnement (16a) avec le levier de déverrouillage d'urgence (16).

5. Serrure de porte selon la revendication 3 ou 4, **caractérisée en ce que** le bras d'accouplement (17c) présente une arête de butée (17d) pour le doigt d'actionnement (7a) du levier d'accouplement (7).

6. Serrure de porte selon l'une des revendications 1 à 5,
**caractérisée en ce que** le levier d'éjection (17) est monté rotatif autour d'un axe (18).

7. Serrure de porte selon l'une des revendications 1 à 6,
**caractérisée en ce que** le levier d'éjection (17) peut être déplacé dans un plan de déverrouillage agencé parallèlement au plan de mécanisme de verrouillage.

8. Serrure de porte selon l'une des revendications 1 à 7,
**caractérisée en ce que** le levier de déverrouillage d'urgence (16) forme, conjointement avec le levier d'éjection (17), le plan de déverrouillage.
